# EUROPÄISCHE PATENTSCHRIFT

(11) **EP 3 607 813 B1**
(45) Veröffentlichungstag und Bekanntmachung des Hinweises auf die Patenterteilung: **06.03.2024**
(21) Anmeldenummer: 19186223.4
(22) Anmeldetag: 15.07.2019
(51) Int. Cl.: A01D 78/10, A01D 41/14

(54) **HEUWERBUNGSMASCHINE UND VERFAHREN**
HAYMAKING MACHINE AND METHOD
MACHINE DE FANAGE ET PROCÉDÉ

(30) Priorität: 07.08.2018 DE 102018213241
(43) Veröffentlichungstag der Anmeldung: 12.02.2020
(73) Patentinhaber: Kverneland Group Kerteminde AS, 5300 Kerteminde (DK)
(72) Erfinder: GOHL, Stefan, 78244 Gottmadingen (DE); PAULI, Marco, 78244 Gottmadingen (DE)
(74) Vertreter: Grünecker Patent- und Rechtsanwälte PartG mbB

(56) Entgegenhaltungen:
- EP-A1- 1 813 142
- EP-A2- 2 850 934
- DE-A1-102014 014 131
- DE-B4-102005 005 557
- US-A1- 2002 011 056

## Beschreibung

Die Erfindung betrifft eine Heuwerbungsmaschine gemäß dem Oberbegriff des Anspruchs 1 sowie ein Verfahren nach Anspruch 8.

Bei der Futterernte zur Erzeugung von Grünfutter kommt es zu unerwünschten Verunreinigungen. Insbesondere hat der Anteil an Asche und Erde im Futter eine negative Auswirkung auf den Energiegehalt des Tier- zum Beispiel Kuhfutters.

Durchschnittlich kommt es zu etwa 80 bis 100 Gramm Asche pro Kilogramm Futter. Bereits eine Reduktion von 10 Gramm an Futter pro Kilogramm bedeutet einen Energieverlust, der etwa 100 Euro pro Kuh und Jahr entspricht. Aus diesem Grund gibt es starke Bemühungen, die Kontamination in der gesamten Produktionskette zu reduzieren. Heuwerbungsmaschinen, wie Heuer und Schwader die aus der EP 2 850 934 A2 bekannt sind, tragen im großen Maße zur Verschmutzung bei.

Neben einer Reduktion der Kontamination ist aber auch eine wirtschaftliche Arbeitsweise einer Heuwerbungsmaschine wesentlich.

Hiervon ausgehend liegt der vorliegenden Erfindung die Aufgabe zugrunde, eine Heuwerbungsmaschine, insbesondere Heuer oder Schwader, sowie ein entsprechendes Verfahren bereitzustellen, die ermöglichen, die Verunreinigungen im Futter zu reduzieren und gleichzeitig wirtschaftlich und zuverlässig zu arbeiten.

Erfindungsgemäß wird diese Aufgabe durch eine Heuwerbungsmaschine nach Anspruch 1 und ein Verfahren nach Anspruch 8 gelöst.

Die erfindungsgemäße Heuwerbungsmaschine weist einen Sensor in Form einer Kamera auf, der derart angeordnet ist, dass er ein Muster, insbesondere Bildmuster B1 auf dem Boden, in Fahrtrichtung betrachtet, hinter dem Rechenkreisel erfassen und mit Hilfe einer Auswerteeinheit auswerten kann. Eine Steuereinrichtung kann die Höhe des Rechenkreisels in Abhängigkeit des erfassten Musters, insbesondere Bildmusters, insbesondere automatisch einstellen. Gemäß der vorliegenden Erfindung kann nun entschieden werden, ob auf der Grundlage eines erkannten Musters, insbesondere Bildmusters die Rechenzinken des Rechenkreisels zu weit unten gelagert sind und weiter nach oben verfahren werden müssen oder aber zu weit oben angeordnet sind und nach unten gefahren werden müssen oder aber nicht verändert werden müssen. Somit kann z.B. durch Bildmuster auf dem Boden eine entsprechende Entscheidung getroffen werden. Erfindungsgemäß ist der Sensor eine Kamera, die den Boden hinter dem Rechenkreisel überwachen kann.

Erfindungsgemäß ist der Sensor mit einer Auswerteeinheit verbunden, derart, dass entsprechende Signale, insbesondere Bildsignale an die Auswerteeinheit weitergeleitet werden können. Die Auswerteeinheit kann eine separate Einheit sein oder Teil der Steuereinrichtung. Die Auswerteeinheit kann erkennen, ob es sich um ein erstes Bildmuster B1 handelt. Ein solches Bildmuster weist bogenförmig gekrümmte Formen auf. Dabei können mehrere bogenförmige Furchen hintereinander angeordnet sein. Diese bogenförmigen Furchen können durchgängig gezogen sein oder aber auch unterbrochen sein, abhängig von der Bodenbeschaffenheit. Diese Furchen entstehen, wenn die Rechenzinken zu tief gelagert sind und die Rechenzinkenenden sich in die Erde graben und ein entsprechendes Muster im Boden erzeugen. Wenn nun also dieses Bildmuster B1 erkannt wird, beispielsweise durch ein Bilderkennungssystem oder z.B. insbesondere durch Vergleich mit Bildern in einer Datenbank, kann ein entsprechendes Signal von der Auswerteeinheit erzeugt werden, so dass der Rechenkreisel derart angesteuert wird, dass er nach oben verfahren werden kann bzw die Zinkenenden nach oben bewegt werden (sodass sie in der Arbeitsposition weiter oben liegen).

Weiter kann die Auswerteeinheit ein zweites Bildmuster B2 erkennen, zum Beispiel durch Bilderkennung oder insbesondere Vergleich mit mehreren Bildmustern einer Datenbank, wobei das zweite Bildmuster insbesondere streifenförmige Linien in Fahrtrichtung, oder ein strukturiertes Muster mit einer großen Anzahl an Kontrastwechseln in unterschiedlichen Richtungen, insbesondere teppichähnliche Strukturen (Futterreste) aufweisen kann. Beim Erkennen des zweiten Musters B2 kann die Auswerteeinheit ein Signal erzeugen, dass der Kreisel nach unten verfahren werden kann bzw. die Zinkenenden nach unten bewegt werden (sodass sie in der Arbeitsposition weiter unten liegen). Es können also auch mehrere Bildmuster B2 hinterlegt sein, die einem Zustand "Kreiselzinken zu hoch" zugeordet sind.

Vorteilhafterweise ist jedem Rechenkreisel ein Sensor zugeordnet, derart, dass der Bodenbereich hinter dem einzelnen Rechenkreiseln zuverlässig erfasst werden kann. Dies ist insbesondere wichtig bei Kreiselschwadern mit mehreren, beispielsweise vier nebeneinander angeordneten Rechenkreiseln, der eine Breite von bis zu 15 m aufweist.

Vorteilhafterweise ist der Sensor auf einem Fahrgestell oder an einem statischen Teil des Rechenkreisels angeordnet, insbesondere an der Kreiselaufhängung oder insbesondere in der Kreiselmitte.

Die Anordnung auf einem statischen Teil des Rechenkreisels bringt den Vorteil mit sich, dass ein größerer Bildbereich von dem Sensor erfasst werden kann.

Es ist auch möglich, zusätzlich einen weiteren Sensor, insbesondere optischen Sensor vorzusehen, der derart angeordnet ist, dass er ein Bildmuster auf dem Boden vor dem Rechenkreisel erfassen kann und insbesondere die Auswerteeinheit die Bilder, die vor und hinter dem Rechenkreisel aufgenommen wurden, abgleicht, was die Auswertung wesentlich vereinfacht.

Weiter es ist möglich, dass der optische Sensor das hinter dem Rechenkreisel aufgenommene Bild an ein Display in der Fahrerkabine des Schleppers leiten kann und insbesondere eine Eingabevorrichtung vorgesehen ist, derart, dass der Fahrer selbst die Höhe des Rechenkreisels, d.h. den Abstand der Zinkenenden zum Boden verstellen kann. Somit kann der Fahrer die Situation hinter dem Rechenkreisel beobachten und aktiv eingreifen, wenn er der Meinung ist, dass der Kreisel zu tief oder zu hoch gelagert ist. Eine entsprechende Vorgehensweise ermöglicht auch eine Einstellung ohne automatische Ansteuerung.

Somit ist eine automatische Steuerung als auch eine Einstellung von Hand möglich.

Es ist auch möglich, dass die Auswerteeinheit die Höhe des Rechenkreisels in Abhängigkeit mehrerer Parameter einstellt, insbesondere in Abhängigkeit der Arbeitsgeschwindigkeit. Hierzu kann ein Sensor vorgesehen sein oder aber die Arbeitsgeschwindigkeit wird über den Schlepper ermittelt oder ein Geschwindigkeitssignal über ein Positionserfassungssystem erhalten wird z.B. über GPS. Unter Arbeitsgeschwindigkeit versteht man vorzugsweise die Fahrtgeschwindigkeit des Zugfahrzeugs bzw. Schleppers und/oder die Drehzahl des Kreisels. Es ist vorteilhaft, wenn die Geschwindigkeit in die Auswertung miteinbezogen wird, da sich die Bildmuster in Abhängigkeit der Geschwindigkeit ändern - d.h. beispielsweise bei größerer Geschwindigkeit des Zugfahrzeugs sind nebeneinander angeordnete Furchen, die von den Zinken erzeugt werden, weiter voneinander beabstandet.

Gemäß dem erfindungsgemäßen Verfahren erfasst ein Sensor, insbesondere optischer Sensor ein Bildmuster auf dem Boden, in Fahrtrichtung betrachtet, hinter dem Rechenkreisel. Die Höhe des Rechenkreisels bzw. der Abstand der Zinkenenden vom Boden wird in Abhängigkeit des erfassten Bildmusters eingestellt. Dabei kann ein Auswertesystem zwischen mehreren Bildmustern unterscheiden und in Abhängigkeit des erkannten Bildmusters den Rechenkreisel nach oben oder unten verfahren oder nicht verfahren.

Es ist möglich, dass a) wenn ein erstes Bildmuster B1 erkannt wird, insbesondere ein Bildmuster mit bogenförmigen Furchen, der Rechenkreisel nach oben verfahren wird und/oder wenn
b) ein zweiten Bildmuster B2 erkannt wird, insbesondere mit Streifen in Fahrtrichtung (oder teppichähnlicher Struktur (Erntereste)), der Rechenkreisel nach unten verfahren wird.

Bei dem erfindungsgemäßen Verfahren kann im Fall a und b zum Beispiel der Rechenkreisel solange verfahren werden, bis ein drittes Bildmuster B3 erkannt wird, dass nicht dem ersten bzw. zweiten Bildmuster entspricht und vorzugsweise nur den Boden zeigt. Das heißt, dass der Rechenkreisel solange bewegt wird, bis wenn zuerst Bildmuster B1 erkannt wurde, die Rechenzinken keine Furchen mehr im Boden erzeugen oder im Falle, dass das Bildmuster B2 erkannt wird und noch Futter auf dem Boden liegt, weil der Rechenkreisel zu hoch verfahren war, kein Futter mehr im Überschuss auf dem Boden liegt. Dazu kann das dritte Bildmuster ebenfalls mit mehreren in einer Datenbank gespeicherten Bildmustern verglichen werden.

Es ist aber auch möglich, dass auf der Grundlage des erkannten Bildmusters B1 erkannt wird, wie tief die Furchen sind, und somit auch ein Stellweg bestimmt werden kann, wie hoch die Zinkenenden nach oben verstellt werden müssen. Die Tiefe der Furchen kann beispielsweise über die Breite der Furchen oder aber über die Farbe, Kontrast abgeschätzt werden.

Vorzugsweise ist eine Eingabevorrichtung vorgesehen, derart, dass der Fahrer selbst die Höhe des Rechenkreisels verstellen kann. Somit kann der Fahrer die Situation hinter dem Rechenkreisel beobachten und aktiv eingreifen, wenn er der Meinung ist, dass der Kreisel zu tief oder zu hoch gelagert ist. Eine entsprechende Vorgehensweise ermöglicht auch eine Einstellung ohne automatische Ansteuerung.

Erfindungsgemäß ist vorgesehen, dass die Auswerteeinheit Muster, insbesondere Bildmuster mit einem Mustererkennungssystem, insbesondere Bildmustererkennungssystem erkennt und unter verschiedenen Mustern, unterscheidet, wobei das jeweilige erkannte Muster einem Zustand aus folgender Gruppe zugeordnet ist: Zinken des Rechenkreisels zu tief, Zinken des Rechenkreisels zu hoch, Zinken des Rechenkreisels in passender Position.

Die vorliegende Erfindung wird nachfolgend unter Bezugnahme folgender Figuren näher erläutert.
- Figur 1: zeigt grob schematisch eine Seitenansicht einer Heuwerbungsmaschine in Form eines Schwaders gemäß der vorliegenden Erfindung.
- Figur 2: zeigt schematisch die Aufsicht auf einen Schwader gemäß der vorliegenden Erfindung.
- Figuren 3a, b, c: zeigen schematisch eine Aufsicht auf einen erfindungsgemäßen Schwader sowie der aufgenommenen Bildmuster.
- Figur 4: zeigt schematisch eine Ausführungsform der vorliegenden Erfindung.
- Figur 5: zeigt schematisch einen Hubmechanismus für eine Kurvenbahn gemäß der vorliegenden Erfindung.

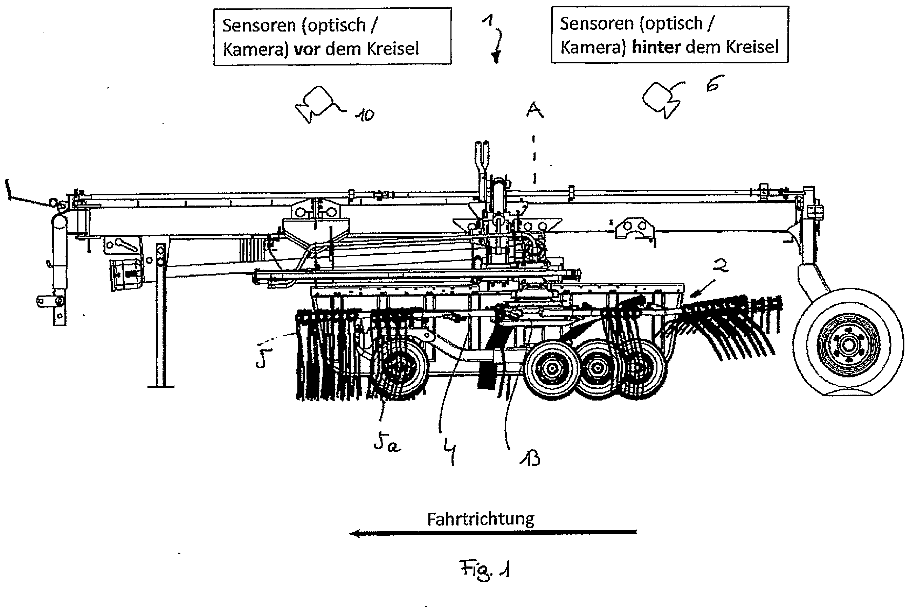

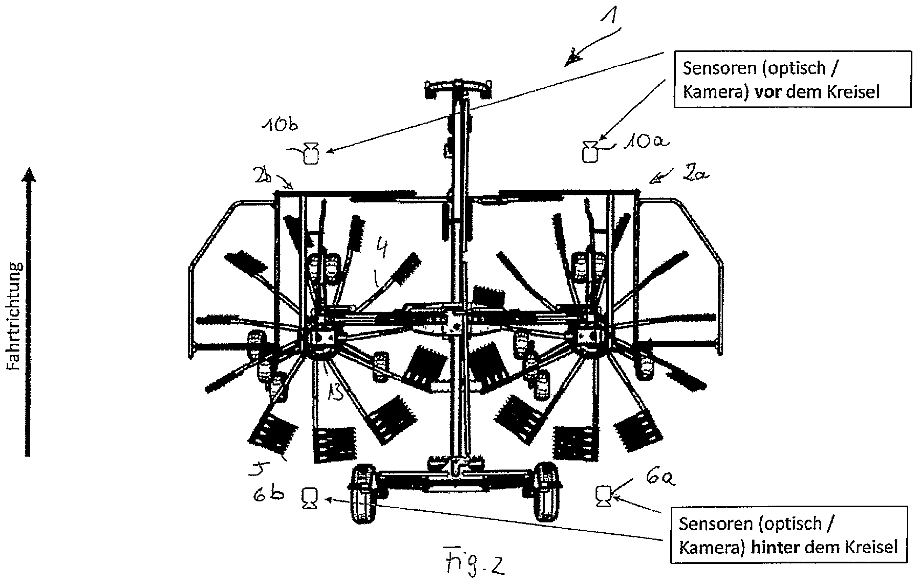

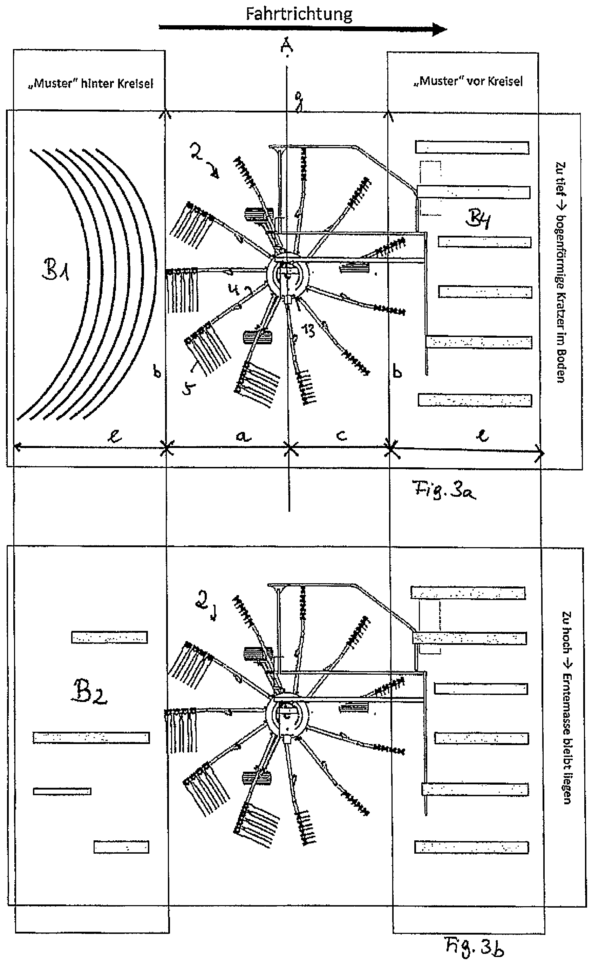

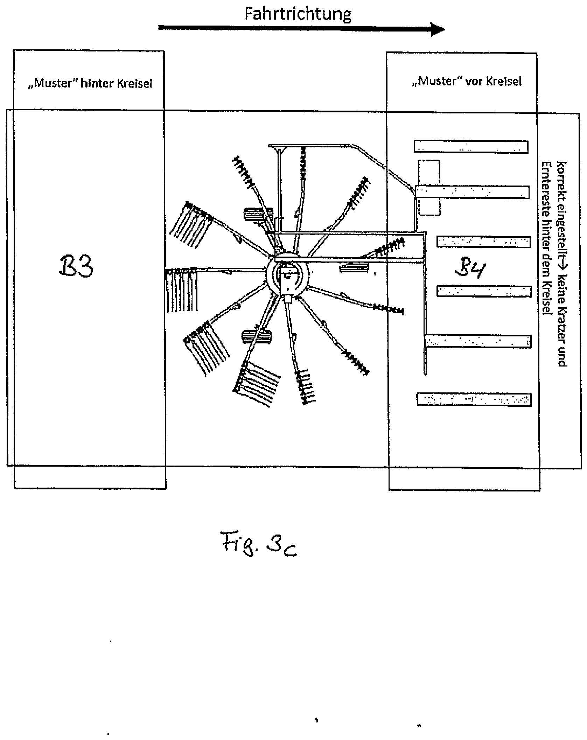

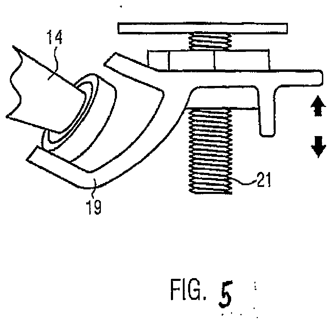

Figuren 1 und 2 zeigen grob schematisch einen Schwader gemäß der vorliegenden Erfindung. Der Schwader 1 weist einen Rechenkreisel 2 auf, der an einem Tragarm befestigt ist. Der Schwader 1 weist ein Rotorgehäuse 13 auf, das drehbar um die Rotorachse a gelagert ist und in bekannter Weise von einem Getriebe, z.B. einem Kegelradgetriebe, das an einem entsprechenden Getriebegehäuse gelagert ist, umlaufend angetrieben wird. In um den Umfang gleichmäßig verteilten Öffnungen des Rotorgehäuses 13 sind in bekannter Weise Zinkenarme 4 gelagert und werden vom Rotorgehäuse 13 angetrieben. An den Zinkenarmen 4 sind Rechenzinken 5 angeordnet. Am anderen Ende der Zinkenarme 13 sind beispielsweise winkelig Hebel 14 angeordnet, insbesondere Rollenhebel 14 (siehe Figur 5), die in einer Kurvenbahn 19 umlaufen. Der Schwenkwinkel und die Längsachse L des Zinkenarms 4 kann während des Umlaufs um eine Achse A geändert werden, d.h. dass die Zinken 5 in einer Arbeitsstellung (siehe beispielsweise rechte Seite in den Figuren 3a bis c) verschwenkt werden, das heißt, eine Stellung, in der die Rechenzinken nach unten in Richtung Boden verschwenkt sind. Außerdem können die Zinken in eine Position nach oben verschwenkt werden (siehe Figuren 3 a bis c, linke Seite). Bei einem Umlauf der Zinkenarme 4 um eine Achse A befinden sich die Rechenzinken etwa 36 bis 41% ihrer Umlaufbahn in der Arbeitsstellung.

Der Rechenkreisel 2 ist in seiner Höhe verstellbar, d.h., dass der Abstand der Zinkenenden 5a zum Boden verstellt werden kann. Dazu kann beispielsweise das Rotorgehäuse in Axialrichtung A auf und ab bewegt werden, was beispielsweise durch eine Höhenverstellspindel 11, die im Getriebegehäuse doppelseitig axial gelagert wird und die Fahrwegsachse axial über das Spindelgewinde abstützt, realisiert werden kann. Alternativ kann auch eine Einrichtung 11 aus einem Hydraulikzylinder zur Höhenverstellung des Rotorgehäuses vorgesehen sein.

Zusätzlich zur Bewegung des Rotorgehäuses kann beispielsweise auch die in Figur 5 gezeigte Kurvenbahn 19, innerhalb des Rotorgehäuses mittels Antrieb höhenverstellbar sein. Über eine solche Kurvenbahn in dem Rotorgehäuse kann ein Schwenkwinkel der Rechenzinken um die Längsachse des jeweiligen Zinkenarms in Abhängigkeit der Umlaufposition des Zinkenarms gesteuert werden. Durch Verstellen der Höhe der Kurvenbahn kann maßgeblich darauf Einfluss darauf genommen werden, um welchen Winkel das untere Ende des Zinkenarms verschwenkt wird, derart, dass sich auch die Höhe der Zinken d.h. der Abstand des Zinkenendes 5a zum Boden zusätzlich verstellen kann. Dabei kann beispielsweise die Spindel 21 eines Spindelmotors verstellt werden. Durch die Höhenverstellung bewegt sich auch der Hebel 14, wobei sich dadurch der Zinkenarm 4 um seine Längsachse L dreht, derart, dass der Schwenkwinkel der Zinken 5 verändert wird und somit auch der Abstand zum Boden sich ändert. Die Kreiselhöhe kann also durch Verstellen der Höhe des Rotors und/oder durch Verstellen der Höhe der Kurvenbahn im und relativ zum Rotorgehäuse erfolgen. Die tatsächliche Position der Zinkenenden 5a ergibt sich dann aus der Summe der Bewegung der Einrichtungen.

Um die Höhe des Rechenkreisels 2 exakt einzustellen, ist erfindungsgemäß mindestens ein Sensor 6, hier in Form einer Kamera vorgesehen, der derart angeordnet ist, dass ein Bildmuster in Fahrtrichtung betrachtet hinter dem Rechenkreisel 2 erfasst werden kann. Die Kamera 6 ist in den Figuren 1 bis 3 nur schematisch dargestellt. Die Kamera ist dabei z.B. derart angeordnet, dass wie aus Figur 3a hervorgeht, z.B. ein Bereich des Bodens, der a =1,2 bis 2,5 m von einer Geraden g, die durch die Mittelachse des Rechenkreisels 2 und senkrecht zur Transportrichtung läuft, beabstandet ist. Die Breite b des Bereichs, der erfasst werden kann, liegt in einem Bereich von 2,4 bis 5 und die Länge I des Bereichs liegt in einem Bereich von 0,5 bis 2 Die Kamera 6 kann insbesondere an einem Fahrwerk unterhalb der Kreiselarme 4 angeordnet sein oder aber auf einem statischen Teil des Rechenkreisels 2, insbesondere der Kreiselaufhängung, insbesondere in der Kreiselmitte. Wesentlich ist, dass der Sensor 6 derart ausgerichtet ist, dass der maßgebliche Bereich erfasst werden kann. Bei einem Heuer ist die Kamera 6 vorzugweise in einem Bereich unterhalb des Kreisels am Fahrwerk angeordnet, d.h. innerhalb des rotierenden Störkreis der Kreiselzinken, d.h. unterhalb der Flugbahn des Heus bzw. Futters, so dass die Muster auf dem Boden erkennbar sind. Zusätzlich kann auch noch eine weitere Kamera vor dem Rechenkreisel 2 angeordnet sein. In Figur 2 sind beispielsweise die Kameras 10a und 10b dargestellt. Der Sensor bzw. die Kamera 10 kann ebenso wie der Sensor 6 an einem statischen Teil des Rotors angeordnet sein, insbesondere an der Aufhängung, vorzugsweise in der Kreiselmitte. Die Kameras können als Doppelkamera ausgebildet sein. Dabei ist hier die Kamera 10 derart angeordnet, dass sie, wie aus den Figuren 3a bis c hervorgeht, einen vorderen Bereich erfassen kann, der einen Abstand c von ... bis ... von einer Geraden g, die durch die Achse A verläuft und senkrecht zur Fahrtrichtung verläuft beanstandet ist. Der erfasste Bereich weist beispielsweise eine Länge I von 0,5 bis 2 und eine Breite b von 2,4 bis 5. auf.

Die Sensoren sind mit einer Auswerteeinheit 8 verbunden, die zur Bilderkennung bzw. Mustererkennung dient. Die Auswerteeinheit 8 kann Teil einer Steuereinrichtung 7 sein, die die Höhe des Rechenkreisels 2 einstellt, indem sie ein entsprechendes Stellglied 11 wie beispielsweise ein Hydraulikzylinder oder einen Antrieb einer Höhenverstellspindel ansteuert. Die Auswerteeinheit 8 kann aber auch eine vorgelagerte separate Einheit sein. Die Auswerteeinheit ist derart ausgebildet, dass sie ein erstes Bildmuster B1 erkennen kann, dass repräsentativ dafür ist, dass die Zinken zu weit unten angeordnet sind. Das erste Bildmuster ist in Figur 3a dargestellt und zeigt mehrere hintereinander angeordnete bogenförmige Furchen. Hier sind die bogenförmigen Furchen durchgehend gezeigt, es kann jedoch auch abhängig vom Boden sein, dass diese bogenförmigen Furchen unterbrochen sind. Die Auswerteeinheit 8 umfasst dabei ein Bilderkennungssystem bzw. Mustererkennungssystem, dass ein entsprechendes Muster erkennen kann. Es ist möglich, dass die Auswerteeinheit 8 das Bild mit mehreren in einer Datenbank abgelegten Bildmustern vergleicht. Es ist auch möglich, wenn optional zusätzlich eine Kamera 10 vorgesehen ist, dass die Auswerteeinheit 8 das Muster vor dem Rechenkreisel und das Muster hinter dem Rechenkreisel abgleicht, um die Auswertung zu vereinfachen, wobei gleiche Anteile ausgeblendet werden. Es ist auch möglich, dass das Bilderkennungssystem bzw. Mustererkennungssystem vorab zur Erkennung bestimmter Muster angelernt wurde.

Wenn die Auswerteeinheit 8 erkennt, dass das erfasste Bildmuster dem Bildmuster B1 entspricht, wird ein entsprechendes Signal erzeugt, derart, dass der Rechenkreisel nach oben bewegt wird, damit den Zinkenenden 5a keine Furchen mehr in die Erde graben.

Wird aber wie in Figur 3b gezeigt, ein zweites Bildmuster B2 erkannt, so kommt die Auswerteeinheit 8 zum Ergebnis, dass der Rechenkreisel 2 zu hoch steht und noch Erntemasse liegen bleibt, was durch die Transportrichtung ausgerichteten Streifen bzw. Linien deutlich wird. Die Auswerteeinheit 8 erzeugt dann ein Signal, derart, dass der Rechenkreisel nach unten verfahren wird. Wenn ein Bildmuster B1 oder B2 erkannt wird, wird der Rechenkreisel 2 zum Beispiel solang in seiner Höhe verfahren, bis beispielsweise das in Figur 3c dargestellte Bildmuster B3 erkannt wird und/oder B1 und B2 nicht mehr erkannt werden. B3 zeigt lediglich den Boden ohne die vorbestimmten Muster B1 und B2.

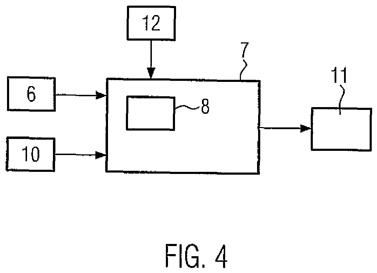

Zuvor wurde eine automatische Verstellung beschrieben, wie sie auch aus Figur 4 hervorgeht, wobei die Sensorsignale in eine Auswerteeinheit 8 geleitet werden, die hier Teil der Steuereinrichtung 7 ist.

Es ist aber auch möglich, zusätzliche Parameter bei der Einstellung der Kreiselhöhe zu berücksichtigen. Ein weiterer möglicher Parameter wäre die Arbeitsgeschwindigkeit, das heißt die Geschwindigkeit des Zugfahrzeugs und/oder die Drehzahl der Kreisel. Insbesondere die Geschwindigkeit des Zugfahrzeugs hat Einfluss auf das Muster, wobei beispielsweise bei schnellerer Transportgeschwindigkeit die nebeneinander angeordneten Furchen weiter voneinander beabstandet sind. Entsprechendes kann bei der Bildauswertung berücksichtigt werden. Darüber hinaus kann auch eine Kennlinie angelegt sein in der Steuerung, wobei mit erhöhter Arbeitsgeschwindigkeit insbesondere mit erhöhter Fahrtgeschwindigkeit abgesenkt wird. Dazu können in der Auswerteeinheit 8 Optimierungsalgorithmen integriert sein. Die Auswerteeinheit kann insbesondere als Entscheidungsunterstützungssystem (DSS) ausgebildet sein.

Es können unterschiedliche messtechnisch erfasste Größen, bzw. Parameter, die in die Auswerteeinheit 8 eingegeben werden, zur Ermittlung der optimalen Höhe des Rechenkreisels berücksichtigt werden und als einzelne Eingangsgrößen eines oder mehrerer Kennfelder verwendet werden und auf der Basis des oder jedes Kennfelds die Höhe des Rechenkreisels automatisch eingestellt werden.

Wenn mehrere Parameter (eingegebene als auch Meßparameter) zur Bestimmung der optimalen Höhe des Rechenkreisels verwendet werden, hat vorzugsweise die Einstellung auf der Grundlage des erkannten Bildmusters B1 Priorität, da im Falle des Erkennens des Bildmusters B1 die Zinken auf jeden Fall angehoben werden müssen.

Es ist aber auch möglich, das Bildmuster alternativ oder zusätzlich an ein Display in der Fahrerkabine zu leiten, derart, dass der Fahrer den Vorgang beobachten kann und insbesondere manuell über eine Eingabeeinrichtung eingreifen kann und die Kreiselhöhe verstellen kann.

Bei dem erfindungsgemäßen Verfahren wird ein Bildmuster auf dem Boden in Fahrrichtung hinter dem Rechenkreisel 2 erfasst. Optional kann auch ein Bildmuster B4 in Fahrtrichtung vor dem Kreisel erfasst werden. Die Messwerte werden an eine Auswerteeinheit 8 weitergeleitet. Optional können noch weiterer Parameter oder Messwerte wie durch 12 in Figur 4 dargestellt ist, an die Auswerteeinheit 8 geleitet werden. Die Auswerteeinheit 8 kann einen Abgleich der vorne und hinten erfassten Bilder B1 und B4 vornehmen, was die weitere Auswertung vereinfacht, da übereinstimmende Bildanteile aus dem Bild entfernt werden können, so dass das Muster besser zu erkennen ist.

Erkennt die Auswerteeinheit 8 das Bildmuster B1, so wird sie ein entsprechendes Signal erzeugen, dass die Steuereinrichtung 7, wie in Figur 4 dargestellt ist, ein Stellglied 11 zur Höhenverstellung des Rotors und /oder der Kurvenbahn ansteuert und den Rechenkreisel insgesamt nach oben verstellt, derart, dass die Rechenzinken keine Furchen mehr in den Boden graben. Dabei wird der Rechenzinken über das Stellglied kontinuierlich oder schrittweise solange nach oben verstellt, bis kein Muster B1 mehr erkennbar ist oder das Muster B3 erkennbar ist, d.h., dass sich der Rechenkreisel in einer korrekten Position befindet.

Erkennt die Auswerteeinheit 8 das Muster B2, so wird ein Signal erzeugt, dass das Stellglied 11 ansteuert, derart, dass der Rechenkreisel nach unten verfahren wird, schrittweise oder kontinuierlich, bis das Muster B2 nicht mehr auftaucht, und bis eben keine Erntemasse mehr hinter dem Rechenkreisel liegen bleibt. Das Stellglied 11 wird solange angesteuert, bis das Muster B2 nicht mehr erkannt wird und/oder das Muster B3 erkannt wird.

Die optimale Höhe kann zusätzlich über weitere Parameter wie zuvor beschrieben wurde, beeinflusst werden. Somit kann ein selbst justierendes System realisiert werden. Vorzugsweise ist für jeden Rechenkreisel ein eigener Sensor 6 und optimal ein eigener Sensor 10 vorgesehen. Dies ist insbesondere deshalb wichtig, da bei großen Breiten, beispielsweise wenn es mehrere Kreise, zum Beispiel bis zu 4 Kreiseln gibt, jeder der Kreisel einzeln angesteuert und in seiner Höhe eingestellt werden muss.

Es ist auch möglich, dass die Auswerteeinheit 8 beim Erkennen des Bildmusters B1 erkennen kann, wie tief die Furchen sind, und insbesondere den Verstellweg auch betragsmäßig nach oben berechnet. Auf die Tiefe der Furchen kann beispielsweise über die Breite der Furchen geschlossen werden und entsprechendes berechnet werden.

## Patentansprüche

1. Heuwerbungsmaschine (1), insbesondere Heuer oder Schwader, mit mindestens einem Rechenkreisel (2), der ein Rotorgehäuse (3) mit mehreren um die Rotorachse A umlaufenden Zinkenarme (4) mit Rechenzinken (5) umfasst, **gekennzeichnet durch**
einen Sensor (6), in Form einer Kamera, der derart angeordnet ist, dass er ein Muster, insbesondere Bildmuster (B1, B2) auf dem Boden (8), in Fahrtrichtung betrachtet hinter dem Rechenkreisel (2), erfassen kann und
eine Steuereinrichtung (7), die die Höhe des Rechenkreisels (2) in Abhängigkeit des erfassten Musters, insbesondere Bildmusters (B1, B2), insbesondere automatisch einstellt wobei der Sensor (6) mit einer Auswerteeinheit (8) verbunden ist, die ein erstes Bildmuster (B1) mit bogenförmigen Furchen erkennen kann und ein Signal erzeugt, so dass der Rechenkreisel (2) nach oben verfahren werden kann.

2. Heuwerbungsmaschine nach Anspruch 1, **dadurch gekennzeichnet, dass** der optische Sensor (6) mit einer Auswerteeinheit (8) verbunden ist und die Auswerteeinheit (8) ein zweites Bildmuster (B2) erkennen kann, das insbesondere streifenförmige Linien in Fahrtrichtung aufweist, und beim Erkennen eines entsprechenden Musters (B2) ein Signal erzeugt, so dass der Rechenkreisel (2) nach unten verfahren werden kann.

3. Heuwerbungsmaschine nach mindestens einem der Ansprüche 1 bis 2, **dadurch gekennzeichnet, dass** jedem Rechenkreisel (2) ein Sensor (6) zugeordnet ist.

4. Heuwerbungsmaschine nach mindestens einem der Ansprüche 1 bis 3, **dadurch gekennzeichnet, dass** der Sensor (6) auf einem Fahrgestell (9) oder an einem statischen Teil des Rechenkreisels (2), insbesondre der Kreiselaufhängung, insbesondere in der Kreiselmitte angeordnet ist.

5. Heuwerbungsmaschine nach mindestens einem der Ansprüche 1 bis 4, **dadurch gekennzeichnet, dass** zusätzlich ein weiterer Sensor, insbesondere optischer Sensor (10) vorgesehen ist, der derart angeordnet ist, dass er ein Bildmuster (B4) vor dem Rechenkreisel (2) erfassen kann und vorzugsweise die Auswerteeinheit (8), die Bilder, die von den Sensoren (6,10) vor und hinter dem Rechenkreisel (2) aufgenommen wurden, abgleicht.

6. Heuwerbungsmaschine nach mindestens einem der Ansprüche 1 bis 5, **dadurch gekennzeichnet, dass** der optische Sensor (6) zumindest das hinter dem Rechenkreisel aufgenommene Bildmuster (B1, B2) auf einem Display in der Fahrerkabine leitet und vorzugsweise der Fahrer die Höhe des Rechenkreisels (2) in Abhängigkeit des Bildmusters verstellen kann.

7. Heuwerbungsmaschine nach mindestens einem der Ansprüche 1 bis 6, **dadurch gekennzeichnet, dass** die Steuereinrichtung (7) die Höhe des Rechenkreisels (2) in Abhängigkeit mehrerer Parameter einstellt, insbesondere in Abhängigkeit der Arbeitsgeschwindigkeit.

8. Verfahren zum Einstellen der Höhe eines Rechenkreisels (2), insbesondere einer Heuwerbungsmaschine nach mindestens einem der Ansprüche 1 bis 7, **dadurch gekennzeichnet, dass** ein Sensor (6), in Form einer Kamera (6), ein Muster, insbesondere Bildmuster (B1, B2) am Boden (20), in Fahrtrichtung betrachtet, hinter dem Rechenkreisel (2) erfasst und in Abhängigkeit des erfassten Musters, insbesondere Bildmusters (B1, B2) die Höhe des Rechenkreisels (2) eingestellt wird, wobei wenn ein erstes Bildmuster (B1) mit bogenförmigen Furchen erkannt wird, der Rechenkreisel (2) nach oben verfahren wird.

9. Verfahren nach Anspruch 8 **dadurch gekennzeichnet, dass**, wenn ein zweites Bildmuster (B2) erkannt wird, insbesondere ein Bildmuster mit Streifen in Fahrtrichtung, der Rechenkreisel (2) nach unten verfahren wird.

10. Verfahren nach Anspruch 8 oder 9, **dadurch gekennzeichnet, dass** im Fall a und b der Rechenkreisel so lange verfahren wird, bis ein drittes Bildmuster (B3) erkannt wird, das nicht dem jeweiligen ersten oder zweiten Bildmuster entspricht und vorzugsweise nur den Boden zeigt.

11. Verfahren nach mindestens einem der Ansprüche 8 bis 10, **dadurch gekennzeichnet, dass** die Höhe des Rechenkreisels (2) in Abhängigkeit mehrerer Parameter eingestellt wird, insbesondere auch in Abhängigkeit der Arbeitsgeschwindigkeit.

12. Verfahren nach mindestens einem der Ansprüche 8 bis 11, **dadurch gekennzeichnet, dass** die Auswerteeinheit (8) beim Erkennen des Bildmusters (B1) erkennen kann, wie tief die Furchen sind, und insbesondere den Verstellweg nach oben berechnet.

13. Verfahren nach mindestens einem der Ansprüche 8 bis 12, **dadurch gekennzeichnet, dass** die Auswerteeinheit (8) Muster, insbesondere Bildmuster mit einem Mustererkennungssystem insbesondere Bildmustererkennungssystem erkennt und unter verschiedenen Mustern unterscheidet, wobei das jeweilige erkannte Muster (B1, B2, B3, B4) einem Zustand aus folgender Gruppe zugeordnet ist: Zinken des Rechenkreisels zu tief, Zinken des Rechenkreisels zu hoch, Zinken des Rechenkreisels in passender Position.

## Claims

1. A haymaking machine (1), in particular a tedder or windrow spreader with at least one raking rotor (2) comprising a rotor housing (3) having a plurality of tine arms (4) rotating about the rotor axis A and comprising rake tines (5), **characterized by** a sensor (6) in the form of a camera which is arranged so that it can detect a pattern, in particular an image pattern (B1, B2) on the ground (8) behind the raking rotor (2), viewed in the direction of travel, and
a controller (7) adjusting the height of the raking rotor (2) as a function of the detected pattern, in particular the image pattern (B1, B2), in particular automatically, wherein the sensor (6) is connected to an evaluation unit (8) able to detect a first image pattern (B1) with arcuate furrows and generates a signal so that the raking rotor (2) can be moved upwards.

2. The haymaking machine according to claim 2, **characterized in that** the optical sensor (6) is connected to an evaluation unit (8) and the evaluation unit (8) is able to detect a second image pattern (B2), which in particular has stripe-shaped lines in the direction of travel, and generates a signal when detecting a corresponding pattern (B2) so that the raking rotor (2) can be moved downwards.

3. The haymaking machine according to at least one of claims 1 to 2, **characterized in that** a sensor (6) is associated with each raking rotor (2).

4. The haymaking machine according to at least one of claims 1 to 3, **characterized in that** the sensor (6) is arranged on a chassis (9) or on a stationary part of the raking rotor (2), in particular the rotor suspension, particularly in the center of the rotor.

5. The haymaking machine according to at least one of claims 1 to 4, **characterized in that** a further sensor, in particular an optical sensor (10), is additionally provided, which is arranged so that it is able to detect an image pattern (B4) in front of the raking rotor (2) and preferably the evaluation unit (8) compares the images recorded by the sensors (6, 10) in front of and behind the raking rotor (2).

6. The haymaking machine according to at least one of claims 1 to 5, **characterized in that** the optical sensor (6) transfers at least the image pattern (B1, B2) recorded behind the raking rotor to a display in the driver's cab and preferably the driver is able to adjust the height of the raking rotor (2) as a function of the image pattern.

7. The haymaking machine according to at least one of claims 1 to 6, **characterized in that** the controller (7) adjusts the height of the raking rotor (2) as a function of several parameters, in particular as a function of the working speed.

8. A method for adjusting the height of a raking rotor (2), in particular of a haymaking machine according to at least one of claims 1 to 7, **characterized in that** a sensor (6), in the form of a camera (6), detects a pattern, in particular an image pattern (B1, B2), on the ground (20) behind the raking rotor (2), viewed in the direction of travel, and the height of the raking rotor (2) is adjusted as a function of the detected pattern, in particular the image pattern (B1, B2), wherein when a first image pattern (B1) with arcuate furrows is detected the raking rotor (2) is moved upwards.

9. The method according to claim 8, **characterized in that** when a second image pattern (B2), in particular an image having stripes in the direction of travel, the raking rotor (2) is moved downwards.

10. The method according to claims 8 or 9, **characterized in that** in cases a and b the raking rotor is moved until a third image pattern (B3) is detected which does not correspond to the respective first or second image patterns and preferably only depicts the ground.

11. The haymaking machine according to at least one of claims 8 to 10, **characterized in that** the height of the raking rotor (2) is adjusted as a function of several parameters, in particular also as a function of the working speed.

12. The method according to at least one of claims 8 to 11, **characterized in that** the evaluation unit (8) is able to determine the depth of the furrows when detecting the image pattern (B1), and in particular calculates the upward adjustment path.

13. The method according to at least one of claims 8 to 12, **characterized in that** the evaluation unit (8) recognizes patterns, in particular image patterns with a pattern recognition system, in particular an image pattern recognition system, and distinguishes between different patterns, the respective recognized pattern (B1, B2, B3, B4) being assigned to a state selected from the following group: tines of the raking rotor are too low, tines of the raking rotor are too high, tines of the raking rotor are in the proper position.

## Revendications

1. Machine de fanage (1), en particulier faneuse ou andaineuse,
avec au moins un râteau rotatif (2), qui comprend un carter de rotor (3) avec plusieurs bras dentés (4) tournant autour de l'axe de rotor A avec des dents de râteau (5), **caractérisé par** un capteur (6), sous la forme d'une caméra, qui est disposé de telle sorte qu'il peut détecter un motif, en particulier des motifs d'image (B1, B2) sur le sol (8), vu dans le sens de la marche derrière du râteau rotatif(2), et
un dispositif de commande (7) qui règle la hauteur du râteau rotatif (2) en fonction du motif détecté, en particulier du motif d'image (B1, B2), en particulier automatiquement, le capteur (6) étant relié à une unité d'évaluation (8) qui peut reconnaître un premier motif d'image (B1) avec des sillons en forme d'arc et qui produit un signal, de sorte que le râteau rotatif (2) peut être déplacé vers le haut.

2. Machine de fanage selon la revendication 1, **caractérisée en ce que** le capteur optique (6) est relié à une unité d'évaluation (8) et l'unité d'évaluation (8) peut reconnaître un deuxième motif d'image (B2) qui présente en particulier des lignes en forme de bandes dans le sens de la marche, et génère un signal lors de la reconnaissance d'un motif correspondant (B2), de sorte que le râteau rotatif (2) peut être déplacé vers le bas.

3. Machine de fanage selon au moins l'une des revendications 1 à 2, **caractérisée en ce qu'**un capteur (6) est associé à chaque râteau rotatif (2).

4. Machine de fanage selon au moins l'une des revendications 1 à 3, **caractérisée en ce que** le capteur (6) est disposé sur un châssis (9) ou sur une partie statique du râteau rotatif (2), en particulier de la suspension du râteau rotatif, notamment au milieu du râteau rotatif.

5. Machine de fanage selon au moins l'une des revendications 1 à 4, **caractérisée en ce qu'**il est prévu en outre un autre capteur, notamment un capteur optique (10), qui est disposé de telle sorte qu'il peut détecter un motif d'image (B4) devant le râteau rotatif (2) et, de préférence, l'unité d'évaluation (8), compare les images qui ont été enregistrées par les capteurs (6, 10) devant et derrière le râteau rotatif (2) .

6. Machine de fanage selon au moins l'une des revendications 1 à 5, **caractérisée en ce que** le capteur optique (6) dirige au moins le motif d'image (B1, B2) enregistré derrière le râteau rotatif sur un écran dans la cabine du conducteur et, de préférence, le conducteur peut régler la hauteur du râteau rotatif (2) en fonction du motif d'image.

7. Machine de fanage selon au moins l'une des revendications 1 à 6, **caractérisée en ce que** le dispositif de commande (7) règle la hauteur du râteau rotatif (2) en fonction de plusieurs paramètres, notamment en fonction de la vitesse de travail.

8. Procédé de réglage de la hauteur d'un râteau rotatif (2), notamment d'une machine de fanage selon au moins l'une des revendications 1 à 7, **caractérisé en ce qu'**un capteur (6), sous la forme d'une caméra (6), observe un motif, notamment un motif d'image (B1, B2) sur le sol (20), dans le sens de la marche, derrière le râteau rotatif (2) et la hauteur du râteau rotatif (2) est réglée en fonction du motif détecté, en particulier du motif d'image (B1, B2), sachant que lorsqu'un premier motif d'image (B1) avec des sillons en forme d'arc est détecté, le râteau rotatif (2) est déplacé vers le haut.

9. Procédé selon la revendication 8, **caractérisé en ce que**, lorsqu'un deuxième motif d'image (B2) est détecté, en particulier un motif d'image avec des bandes dans la direction de déplacement, le râteau rotatif (2) est déplacé vers le bas.

10. Procédé selon la revendication 8 ou 9, **caractérisé en ce que**, dans les cas a et b, le râteau rotatif est déplacé jusqu'à ce qu'un troisième motif d'image (B3) soit reconnu, qui ne correspond pas au premier ou au deuxième motif d'image respectif et qui montre de préférence uniquement le sol.

11. Procédé selon au moins l'une des revendications 8 à 10, **caractérisé en ce que** la hauteur du râteau rotatif (2) est réglée en fonction de plusieurs paramètres, notamment aussi en fonction de la vitesse de travail.

12. Procédé selon au moins l'une des revendications 8 à 11, **caractérisé en ce que** l'unité d'évaluation (8) peut reconnaître, lors de la reconnaissance du motif d'image (B1), la profondeur à laquelle se trouvent les sillons, et calcule en particulier la course de réglage vers le haut.

13. Procédé selon au moins l'une des revendications 8 à 12, **caractérisé en ce que** l'unité d'évaluation (8) reconnaît des motifs, en particulier des motifs d'image avec un système de reconnaissance de motifs, en particulier un système de reconnaissance de motifs d'image, et effectue la distinction entre différents motifs, le motif reconnu respectif (B1, B2, B3, B4) étant associé à un état du groupe suivant : dents du râteau rotatif trop basses, dents du râteau rotatif trop hautes, dents du râteau rotatif dans une position appropriée.
